# EUROPEAN PATENT SPECIFICATION

(11) **EP 1 071 537 B1**
(45) Date of publication and mention of the grant of the patent: **11.06.2003**
(21) Application number: 99913792.0
(22) Date of filing: 15.03.1999
(51) Int. Cl.: B23Q 7/00

(54) **MACHINE TOOL AND A METHOD RELATING TO MACHINING WORKPIECES**
WERKZEUGMASCHINE UND VERFAHREN ZUR BEARBEITUNG DES VERFAHRENS
MACHINE-OUTIL ET PROCEDE ASSOCIE A L'USINAGE DE PIECES A TRAVAILLER

(30) Priority: 16.03.1998 SE 9800925
(43) Date of publication of application: 31.01.2001
(73) Proprietor: Quintax Machine Tools AB, 591 29 Motala (SE)
(72) Inventor: COUDERT, Roland, F-46400 Saint Céré (FR)
(74) Representative: Karlsson, Leif Karl Gunnar
(86) International application number: SE9900397
(87) International publication number: WO99050020

(56) References cited:
- EP-A2- 0 742 073
- DE-C1- 19 623 080
- US-A- 4 644 635

## Description

### Background of the invention

According to a first aspect the present invention relates to a machine tool of the kind defined in the preamble of Claim 1, and according to a second aspect relates to a method of the kind defined in the preamble of Claim 11.

With machine tools of this kind, it is important to maximise the time in which the machine is performing work. This applies in particular to large machines, and then primarily to multi-operation machines, since the larger and more complex, and therewith the more expensive, the machine, the greater the necessity of utilising the machine effectively.

One particularly important aspect in this regard is to reduce the idling time taken to rig the workpieces in the machine, i.e. to bring the workpieces into a correct position of alignment and to secure the workpieces to the worktable of the machine, said table often being rotatable. In conventional methods, this has been achieved inside the working space of the machine, resulting in an encroachment on the useful operation time.

It has long been known to use different forms of palette systems, in an endeavour to avoid this time wastage. This use involves attaching the workpiece to a workpiece holder, i.e. to a so-called palette. This is done outside the working space of the machine and therefore does not encroach on the operative time of the machine. The workpiece is fitted so as to form a transportable and stable unit together with the workpiece holder. Subsequent to having fitted the workpiece to the workpiece holder, the workpiece holder and the workpiece fitted thereto is moved to the worktable and placed in a predetermined position thereon.

The palette system can be of a more or less sophisticated design. The simplest system is one in which the workpiece holder is lifted away from the worktable, with the aid of a manually operated device and another workpiece holder that has been rigged with a fresh workpiece during the time that the earlier mentioned workpiece was being worked lifted onto the worktable and fastened manually thereto, either semi-automatically or fully automatically.

In more automated systems, the armed workpiece holder is moved automatically from a position outside the working space into said space and then fastened to the worktable without assistance from the operator.

The design of this automatic transporting arrangement may vary widely. For instance, the transporter may comprise an arrangement of slides where the workpiece holders are positioned with the aid of spindles, racks, lines, rods, etc., or as revolving units where two or more workpiece holders are indexed and stepped to and from the position on the worktable where machining of the workpiece shall take place.

Machines of the kind to which the invention is directed are manoeuvred and monitored by an operator from one side of the machine, this side preferably being readily accessible to the operator and providing a good view of the machine. That side of the space in which the machine is located and used as an operator working position is defined in this document as the front side of the working space.

According to known palette system techniques, the rigging station, i.e. the location at which the workpieces are fitted to and removed from the workpiece holders, is on the front side of said working space. The rigging station is thus located between the operator and the tool used to machine the workpiece. The rigging station thus obstructs the view of the operator and makes physical communication between the operator and the place where the workpiece is machined difficult to achieve. When the operator needs to access the working space, it is necessary for the operator to try to come round the rigging station. This is often almost impossible to achieve, and is also troublesome from an environmental and health aspect. It is often also impossible to inspect the workpiece/machine visually from a position on one side of the rigging station.

Consequently, the advantages that are achieved with a palette system are lost to some extent as a result of the workpiece station being located in the path of the operator, therewith making the operator's work difficult to carry out.

### Description of the invention

As seen against this background, the object of the present invention is to retain the advantages afforded by a palette system while avoiding the drawbacks associated with known techniques.

This object is achieved in accordance with the invention, with a machine tool of the kind defined in the preamble of Claim 1 and having the characteristic features set forth in the characterising clause of said Claim, and also with a method of the kind defined in the preamble of Claim 11 and comprising the method steps defined in the characterising clause of said Claim.

Because the machine is designed so that the interchange of workpieces takes place on the rear side of the working space, i.e. on that side of said space where the machine is not constructed for operator manoeuvres, there are no operation obstructions of the aforedescribed kind that exist with known techniques.

The inventive palette system provides particular benefits when used together with a portal-type machine, and primarily in conjunction with cutting work. The advantages afforded by the inventive palette system are highly significant in respect of multi-operation machines. Such machines therefore constitute advantageous embodiments of the invention.

According to one advantageous embodiment of the inventive machine, a workpiece holder station is provided at the rear side of the working space. This enables the workpiece holders to be transported to and from the working space in a well-adapted and rational manner.

The station will preferably include a magazine that contains a plurality of workpiece holders. This enables workpiece holders fitted with workpieces, i.e. armed workpiece holders, to be constantly held in readiness for transportation into the working space for machining of said workpiece immediately machining of a preceding workpiece in the machine has been completed.

According to a further preferred embodiment of the invention, the magazine is provided with transportation means for interchanging workpieces, therewith taking a further convenient step towards enhanced atomisation.

In this regard, the transporter control means are conveniently integrated with the means that control the actual machining process, so that workpiece interchanges can be effected with the least possible time loss.

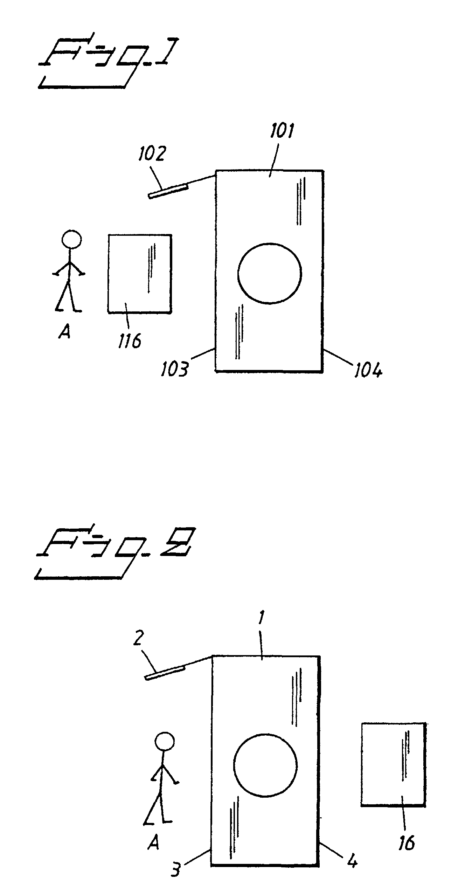

These embodiments of the inventive machine and other advantageous embodiments thereof are set forth in the Claims appended to Fig. 1.

The inventive method affords the same advantages as those described above with reference to the inventive machine. The Claims dependent on Claim 11 define advantageous embodiments of the inventive method, by means of which advantages of the same kind as those described above are achieved.

The term worktable as used in this document refers solely to a unit having a horizontal chucking surface. The worktable can have any desired orientation and the term thus includes any element or component in the vicinity of the working space to which a workpiece holder can be fastened such that the workpiece will be in position for machining said workpiece in the working space.

### Brief description of the drawings

- Figure 1: is an outline diagram showing a known technique from above.
- Figure 2: is an outline diagram showing an inventive machine tool from above.
- Figure 3: is a schematic illustration of a machine tool according to a preferred embodiment of the invention from above, where machine parts that obstruct inventive features and are irrelevant to the invention have been omitted from the Figure.
- Figure 4: is a schematic side view of the machine shown in Fig. 3.

### Description of a preferred embodiment of the invention

Fig. 1 illustrates the design of a typical machine tool that includes a palette system. The working part of the machine is referenced 101 and includes a working space that has a front side 103 facing towards the operator A, and a rear side 104 which faces in the opposite direction. Numeral 102 identifies a control panel. Arranged between the working space of the machine in the machining part 1 and the position occupied by the operator A for manoeuvring/controlling and monitoring the machine on the front side 103 of said space is a workpiece holder station 116. The workpiece holder station 116 is situated in a position, which makes it difficult for the operator to carry out his/her working tasks, as described in the introductory part of this document.

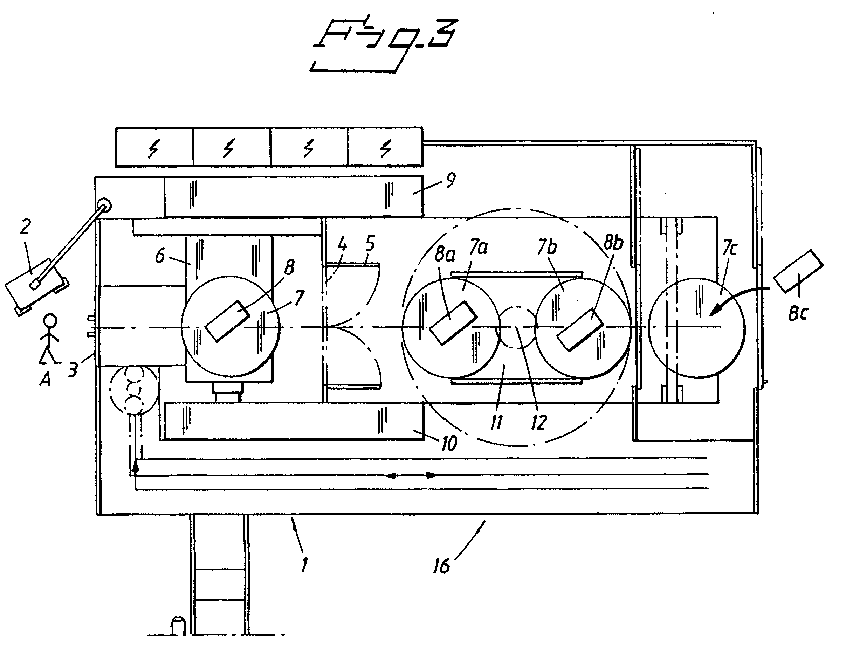

Fig. 2 illustrates the principle design of an inventive machine. In this case, the workpiece holder station 116 is positioned on the rear side 4 of the working space in the machining part 1 of the machine tool. The operator A is able to carry out his/her work from the front side 3 of the working space, without the interference of an obstruction. The machine control panel is referenced 2.

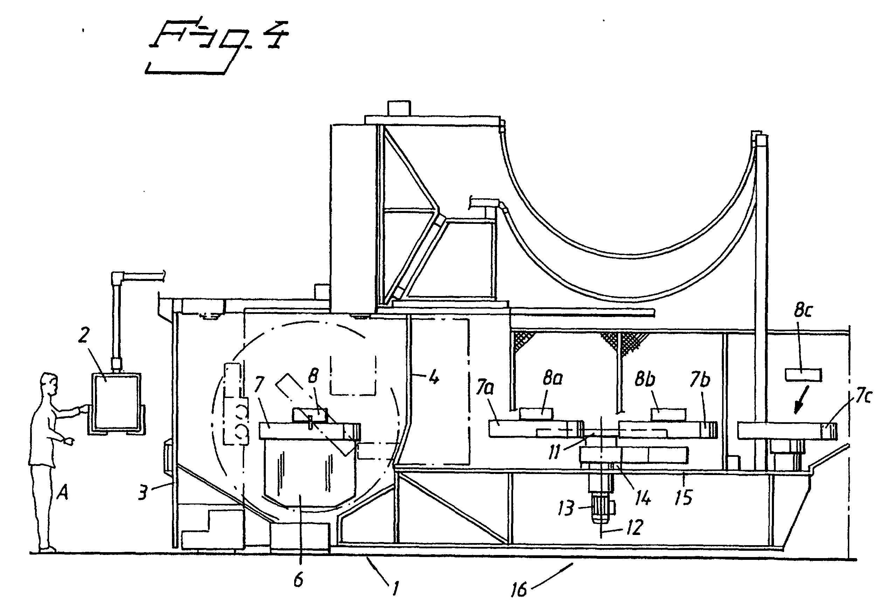

Fig. 3 illustrates a preferred embodiment of an inventive machine, which is constructed in accordance with the Fig. 2 illustration. The machine is a multi-operation pillar machine. Although not shown, two pillars or columns 9 and 10 are interconnected at their tops by a tool carrying part which supports a tool holder that includes a magazine in which different types of tools are housed. Although the illustrated machine tool is intended for cutting work, it will be understood that the invention can also be applied with other types of work. The working space in which the tool machines a workpiece 8 is defined within the portal. The workpiece 8 is fixedly mounted in a determined position on a workpiece holder 7.

The workpiece holder 7 is, in turn, placed in a predetermined position on a worktable 6 in the working space of said machine. The workpiece is therewith aligned in a precise, predetermined position with the spindle of the tool holder and can be machined or worked in accordance with a predetermined machining programme with total accuracy. Machining or working of the workpiece is monitored by the operator A from the front side 3 of the working space and any manoeuvring or control required can be achieved through the medium of the control panel 2.

Positioning of the workpiece 8 on the workpiece holder 7 is the rigging operation that takes a relatively long time to achieve, whereas positioning of the workpiece holder 7 is effected quickly without needing to align the holder, due to the fact that the holder 7 and the worktable 6 are mutually adapted so that the former will be located in its predetermined intended position on the worktable 6 without fail.

A workpiece holder 7 armed with one or more workpieces is moved into the working space through the rear side 4 of said space, and leaves the working space through the same route when machining of said workpiece has been completed. The interchange of workpieces thus takes place with the minimum of encroachment on the working time of said machine.

A workpiece holder station 16 is located on the rear side 4 of the working space. The station includes a magazine 11 that has workpiece holder positions 7a, 7b. The magazine will have room for a plurality of workpiece holders, in the illustrated case two holders. The magazine 11 is rotatable about an axis 12 that extends perpendicular to the plane of the drawing, and is also movable horizontally as seen in the drawing. A rigging station for fitting a workpiece 8c to a workpiece holder in position 7c is provided to the right of the magazine 11 as seen in the Figure.

Workpieces 8 are interchanged in the machine in the following manner. When machining of the workpiece 8 has been completed, a pair of doors 5 on the rear side of the working space are opened. The magazine 11 which has no workpiece holder in position 7a but has a workpiece holder with an unworked workpiece 8b in position 7b is moved to the left in the Figure and into the working space where the magazine grips the workpiece holder 7 carrying the machined workpiece 8. The magazine then turns and moves back to the illustrated position, while carrying with it the workpiece holder 7 and the machined workpiece 8. The magazine 11 is then rotated through half a revolution around the axis 12, so that the workpiece holder 7b carrying the unworked workpiece 8b will now face towards the working space of the machine. The magazine is then again moved towards and into the working space and there places the workpiece holder 7b carrying the unworked workpiece 8b in the predetermined position on the worktable in said space. The magazine 11 is then moved again to the right in the Figure and out from the working space, whereafter the doors 4 are closed and the now positioned workpiece 8b machined. In this stage of the interchange process, movement of the magazine away from the working space of the machine continues beyond the centre position shown in the Figure, out towards the rigging station located furthest to the right in said Figure, such that the workpiece holder 7 carrying the machined workpiece will be placed in position 7c, where the workpiece 8 is removed from the holder and an unworked workpiece 8c is fitted to the holder in the place of the workpiece 8. Finally, the magazine is moved to the left in the Figure, to its central position, therewith completing the workpiece interchange cycle and enabling the entire interchange process to be repeated.

Lateral movement of the magazine 11 from the central position into and away from the working space and to and from the rigging station is effected by means of a typical transporter arrangement (not shown). Since this transporter arrangement is not included in any novel aspect of the invention, it has been omitted from the Figure for the sake of clarity.

The workpiece interchange at the rigging station need not necessarily occur directly on the workpiece holder located in position 7c, in the aforedescribed manner. Alternatively, the workpiece holder located in position 7c and carrying the machined workpiece 8 can be lifted away and a workpiece holder to which a workpiece has already been fitted placed in the position earlier occupied by said holder. This alternative procedure can be advantageous when the time taken to fit a workpiece to a workpiece holder and to remove a workpiece therefrom exceeds the time taken to machine the workpiece.

The magazine may include more positions than the two positions shown in the example. The magazine may be solely rotatable and stationary in other respects, wherewith the workpiece holders are transported to and from the magazine, from and to the working space, and from and to the rigging station with the aid of transport devices that are separate from the magazine.

Fig. 4 is a side view of the machine shown in Fig. 3, with a workpiece holder 7 positioned in the working space and with the workpiece position 7a, 7b and 7c in the same places as in Fig. 3. Fig. 4 also shows the motor 13 that rotates the magazine 11. The motor is mounted stationary on a frame part 15 of the machine and will thus not accompany the magazine 11 in its translatory movements. The motor 13 is connected to and disconnected from the magazine 11 with the aid of a clutch arrangement 14.

Machining of the workpieces by the machine tool is controlled automatically, this control also including the rotary and translatory movements of the magazine 11.

## Claims

1. A machine tool for machining workpieces in a working space in the machine, said working space defining a front side (3) in a first direction which permits manoeuvring and monitoring of the machine by an operator, and defines a rear side (4) in a second direction, said machine including a worktable (6) in said working space, and a workpiece holder (7) that can be brought to and removed from a predetermined position on the worktable (6), and which can be transported to and from the working space while carrying at least one workpiece (8), **characterized in that** the machine is constructed to allow the workpiece holder (7) to be transported via the rear side (4) of the working space.

2. A machine tool according to Claim 1, **characterized by** upstanding columns (9, 10) which support a tool-carrying unit which, together with the columns (9, 10), forms a portal that defines said working space, said tool carrying unit being provided with a tool-carrying holder.

3. A machine tool according to Claim 1 or 2, **characterized in that** said machine is designed for cutting work.

4. A machine tool according to any one of Claims 1-3, **characterized in that** the machine includes a plurality of interchangeable tools housed in a tool magazine.

5. A machine tool according to any one of Claims 1-4, **characterized in that** the machine includes a workpiece holder station (16) located on the rear side (4) of the working space.

6. A machine tool according to Claim 5, **characterized in that** the machine includes first transporting means for transporting workpiece holders between the station (16) and the working space.

7. A machine tool according to Claim 5 or 6, **characterized in that** the station (16) includes a magazine (11) for at least two workpiece holders (7a, 7b).

8. A machine tool according to Claim 7, **characterized in that** the magazine is provided with second transporting means (13) for interchanging the magazine positions of the workpiece holders (7a, 7b).

9. A machine tool according to Claim 8, **characterized in that** the positions of the workpiece holders (7a, 7b) in the magazine includes a first position, in which the workpiece holder (7a) is adapted to be transported from the magazine to the working space, and a second position (7b), in which a workpiece (8c) can be fitted to and removed from the workpiece holder (8b).

10. A machine tool according to any one of Claims 6-9, **characterized by** first control means for controlling machining of a workpiece, and second control means for controlling said first and second (13) transporting means, wherewith the first control means is adapted to influence said second control means, and vice versa.

11. A method of machining workpieces in a working space of a machine tool, said space defining a front side (3) in a first direction from which the machine can be operated and monitored, and which defines a rear side (4) in a second direction, wherein at least one workpiece is fitted to a workpiece holder (7) outside said space and said workpiece holder (7) is then moved into said space and secured in a predetermined position on a worktable (6) located therein, **characterized by** moving the workpiece holder (7) into said position through the rear side (4) of said space and by removing said holder (7) from said space through the same route when machining of said workpiece has been completed.

12. A method according to Claim 11, **characterized by** applying the method with a cutting machine, preferably a multi-operational machine.

13. A method according to Claims 11 and 12, **characterized by** bringing a workpiece holder (7) carrying a workpiece to a preparatory position on the rear side (4) of said space.

14. A method according to any one of Claims 11-13, **characterized by** providing a plurality of workpiece holders (7), said holders (7) being arranged in a magazine (11) on the rear side (4) of said space.

15. A method according to Claim 14, **characterized by** transporting a workpiece holder (7) into the space from a prepared position in the magazine (11); and by fitting a workpiece to and removing a workpiece from a workpiece holder (7) in a mounting position in said magazine (11) or outside said magazine (11).

16. A method according to any one of Claims 11-15, **characterized by** controlling the transportation of workpiece holders (7) in dependence on the control of the machining process, or vice versa.

## Patentansprüche

1. Werkzeugmaschine zum maschinellen Bearbeiten von Werkstücken in einem Bearbeitungsraum in der Maschine, wobei der Bearbeitungsraum eine Vorderseite (3) in einer ersten Richtung aufweist, die Steuerung und Überwachung der Maschine durch eine Bedienungsperson ermöglicht, und eine Rückseite (4) in einer zweiten Richtung aufweist, wobei die Maschine einen Werkstücktisch (6) in dem Bearbeitungsraum und einen Werkstückhalter (7) enthält, der an eine vorgegebene Position auf dem Werkstücktisch (6) gebracht und von ihr entfernt werden kann, und der zu dem Bearbeitungsraum hin und von ihm weg transportiert werden kann, während er wenigstens ein Werkstück (8) trägt, **dadurch gekennzeichnet, dass** die Maschine so aufgebaut ist, dass sie es ermöglicht, den Werkstückhalter (7) über die Rückseite (4) des Bearbeitungsraums zu transportieren.

2. Werkzeugmaschine nach Anspruch 1, **gekennzeichnet durch** aufrecht stehende Säulen (9, 10), die eine werkzeugtragende Einheit stützen, die zusammen mit den Säulen (9, 10) ein Portal bildet, das den Bearbeitungsraum begrenzt, wobei die werkzeugtragende Einheit mit einem werkzeugtragenden Halter versehen ist.

3. Werkzeugmaschine nach Anspruch 1 oder 2, **dadurch gekennzeichnet, dass** die Maschine für Schneidbearbeitung bestimmt ist.

4. Werkzeugmaschine nach einem der Ansprüche 1-3, **dadurch gekennzeichnet, dass** die Maschine eine Vielzahl auswechselbarer Werkzeuge enthält, die in einem Werkzeugmagazin aufgenommen sind.

5. Werkzeugmaschine nach einem der Ansprüche 1-4, **dadurch gekennzeichnet, dass** die Maschine eine Werkstück-Halterstation (16) enthält, die sich an der Rückseite (4) des Bearbeitungsraums befindet.

6. Werkzeugmaschine nach Anspruch 5, **dadurch gekennzeichnet, dass** die Maschine eine erste Transporteinrichtung zum Transportieren von Werkstückhaltern zwischen der Station (16) und dem Bearbeitungsraum enthält.

7. Werkzeugmaschine nach Anspruch 5 oder 6, **dadurch gekennzeichnet, dass** die Station (16) ein Magazin (11) für wenigstens zwei Werkstückhalter (7a, 7b) enthält.

8. Werkzeugmaschine nach Anspruch 7, **dadurch gekennzeichnet, dass** das Magazin mit einer zweiten Transporteinrichtung (13) zum Wechseln der Magazinpositionen der Werkstückhalter (7a, 7b) versehen ist.

9. Werkzeugmaschine nach Anspruch 8, **dadurch gekennzeichnet, dass** die Positionen der Werkstückhalter (7a, 7b) in dem Magazin eine erste Position, in der der Werkstückhalter (7a) von dem Magazin zu dem Bearbeitungsraum transportiert werden kann, und eine zweite Position (7b) einschließen, in der ein Werkstück (8c) an dem Werkstückhalter (8b) angebracht und von ihm entfernt werden kann.

10. Werkzeugmaschine nach einem der Ansprüche 6-9, **gekennzeichnet durch** eine Steuereinrichtung, die die maschinelle Bearbeitung eines Werkstücks steuert, sowie eine zweite Steuereinrichtung, die die erste und die zweite (13) Transporteinrichtung steuert, wobei die erste Steuereinrichtung die zweite Steuereinrichtung beeinflusst und umgekehrt.

11. Verfahren zum maschinellen Bearbeiten von Werkstücken in einem Bearbeitungsraum einer Werkzeugmaschine, wobei der Raum eine Vorderseite (3) in einer ersten Richtung aufweist, von der aus die Maschine betrieben und überwacht werden kann, und der eine Rückseite (4) in einer zweiten Richtung aufweist, wobei wenigstens ein Werkstück an einem Werkstückhalter (7) außerhalb des Raums angebracht wird und der Werkstückhalter (7) dann in den Raum hinein bewegt und in einer vorgegebenen Position auf einem darin befindlichen Werkstücktisch (6) befestigt wird, **gekennzeichnet durch** das Bewegen des Werkstückhalters (7) an die Position über die Rückseite (4) des Raums und **durch** das Entfernen des Halter (7) aus dem Raum über den gleichen Weg, wenn die maschinelle Bearbeitung des Werkstücks abgeschlossen ist.

12. Verfahren nach Anspruch 11, **dadurch gekennzeichnet, dass** das Verfahren bei einer Schneidmaschine, vorzugsweise einer Mehrfachfunktionsmaschine, eingesetzt wird.

13. Verfahren nach den Ansprüchen 11 und 12, **dadurch gekennzeichnet, dass** ein Werkstückhalter (7), der ein Werkstück trägt, an eine vorbereitende Position an der Rückseite (4) des Raums gebracht wird.

14. Verfahren nach einem der Ansprüche 11-13, **dadurch gekennzeichnet, dass** eine Vielzahl von Werkstückhaltern (7) vorhanden ist, wobei die Halter (7) in einem Magazin (11) an der Rückseite (4) des Raums angeordnet sind.

15. Verfahren nach Anspruch 14, **dadurch gekennzeichnet, dass** ein Werkstückhalter (7) in den Raum aus einer vorbereiteten Position in dem Magazin (11) transportiert wird und ein Werkstück an einer Anbringungsposition in dem Magazin (11) oder außerhalb des Magazins (11) an einem Werkstückhalter (7) angebracht und ein Werkstück von ihm entfernt wird.

16. Verfahren nach einem der Ansprüche 11-15, **dadurch gekennzeichnet, dass** der Transport von Werkstückhaltern (7) in Abhängigkeit von der Steuerung des maschinellen Bearbeitungsvorgangs gesteuert wird oder umgekehrt.

## Revendications

1. Machine-outil destinée à usiner des pièces à travailler dans l'espace de travail de la machine, cet espace de travail définissant, dans une première direction, un côté avant (3) qui permet la manoeuvre et la surveillance de la machine par un opérateur, et définissant, dans une deuxième direction, un côté arrière (4), la machine comprenant une table de travail (6) située dans l'espace de travail, et un porte-pièce (7) pouvant être amené dans une position prédéterminée sur la table de travail (6) et être retiré de celle-ci, et qui peut être transporté dans l'espace de travail et en être retiré tout en portant au moins une pièce à travailler (8), **caractérisée en ce que** la machine est conçue pour permettre au porte-pièce (7) d'être transporté en passant par le côté arrière (4) de l'espace de travail.

2. Machine-outil selon la revendication 1, **caractérisée par** des colonnes droites (9, 10) qui servent de support à une unité porte-outil qui, avec les colonnes (9, 10), forme un portique qui définit l'espace de travail, l'unité porte-outil étant équipée d'un support porte-outil.

3. Machine-outil selon la revendication 1 ou 2, **caractérisée en ce que** la machine est conçue pour effectuer un travail de découpe.

4. Machine-outil selon l'une quelconque des revendications 1 à 3, **caractérisée en ce que** la machine comprend une pluralité d'outils interchangeables logés dans un magasin d'outils.

5. Machine-outil selon l'une quelconque des revendications 1 à 4, **caractérisée en ce que** la machine comprend un poste destiné au porte-pièce (16) situé du côté arrière (4) de l'espace de travail.

6. Machine-outil selon la revendication 5, **caractérisée en ce que** la machine comprend des premiers moyens de transport pour transporter les porte-pièces entre le poste (16) et l'espace de travail.

7. Machine-outil selon la revendication 5 ou 6, **caractérisée en ce que** le poste (16) comprend un magasin (11) destiné à au moins deux porte-pièces (7a, 7b).

8. Machine-outil selon la revendication 7, **caractérisée en ce que** le magasin est équipé de deuxièmes moyens de transport (13) permettant d'interchanger les positions, dans le magasin, des porte-pièces (7a, 7b).

9. Machine-outil selon la revendication 8, **caractérisée en ce que** les positions des porte-pièces (7a, 7b) dans le magasin comprennent une première position, dans laquelle le porte-pièce (7a) est susceptible d'être transporté du magasin vers l'espace de travail, et une deuxième position (7b), dans laquelle une pièce à travailler (8c) peut être montée dans le porte-pièce (8b), et en être retirée.

10. Machine-outil selon lune quelconque des revendications 6 à 9, **caractérisée par** des premiers moyens de commande destinés à commander l'usinage d'une pièce à travailler, et par des deuxièmes moyens de commande destinés à commander les premier et deuxième (13) moyens de transport, les premiers moyens de commande étant susceptibles d'influencer les deuxièmes moyens de commande, et vice versa.

11. Procédé d'usinage de pièces dans l'espace de travail d'une machine-outil, cet espace définissant, dans une première direction, un côté avant (3) par lequel la machine peut être manoeuvrée et surveillée, et définissant, dans une deuxième direction, un côté arrière (4), au moins une pièce à travailler étant montée sur un porte-pièce (7) situé en-dehors de cet espace, et le porte-pièce (7) étant ensuite placé dans cet espace et fixé dans une position prédéterminée sur une table de travail située à l'intérieur de celui-ci, **caractérisé par** le fait de déplacer le porte-pièce (7) dans la position en passant par le côté arrière (4) de l'espace et par le fait de retirer le porte-pièce (7) de l'espace suivant la même trajectoire une fois que l'usinage de la pièce est terminé.

12. Procédé selon la revendication 11, **caractérisé par** l'application du procédé à une machine à découper, de préférence une machine multi-opérationnelle.

13. Procédé selon les revendications 11 et 12, **caractérisé par** le fait d'amener un porte-pièce (7) portant une pièce dans une position préparatoire du côté arrière (4) de l'espace.

14. Procédé selon l'une quelconque des revendications 11 à 13, **caractérisé par** le fait de prévoir une pluralité de porte-pièces (7), ces porte-pièces (7) étant disposés dans un magasin (11) du côté arrière (4) de l'espace.

15. Procédé selon la revendication 14, **caractérisé par** le fait de transporter un porte-pièce (7) dans l'espace, à partir d'une position préparée dans le magasin (11) ; et par la fixation d'une pièce dans un porte-pièce (7) et son retrait de celui-ci, dans une position de montage, dans le magasin (11) ou en-dehors du magasin (11).

16. Procédé selon l'une quelconque des revendications 11 à 15, **caractérisé par** la commande du transport des porte-pièces (7) en fonction de la commande du procédé d'usinage, ou vice versa.
